# EUROPEAN PATENT APPLICATION

(11) **EP 4 553 683 A1**
(43) Date of publication of application: **14.05.2025**
(21) Application number: 24208348.3
(22) Date of filing: 23.10.2024
(51) Int. Cl.: G06F 21/31, G06F 21/32, G10L 17/00, G10L 17/24, H04L 9/32, H04L 9/40, H04W 12/06

(54) **APPARATUS & METHOD FOR AUTHENTICATION**

(30) Priority: 13.11.2023 GB 202317343
(71) Applicant: Nokia Technologies Oy, 02610 Espoo (FI)
(72) Inventor: O'GORMAN, Lawrence, Madison (US)
(74) Representative: Nokia EPO representatives

(57) **Abstract**

Apparatus comprising means for: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

## Description

### Field

Various example embodiments relate to an apparatus & method suitable for authentication.

### Background

User authentication is the process of verifying the identity of a user. It may be necessary to verify the identify of a user before granting access to a resource and/or service. One way to authenticate a user is to use a piece of knowledge that the user *"knows".* An example piece of knowledge is a password. Another way to authenticate a user is to use a piece of information that the user "is". For example, a piece of biometric information associated with the user (e.g., the user's voice characteristics). Combining both of these pieces of information in a single authentication process is known as two factor authentication.

One way to perform two factor authentication is for a user to speak a passphrase and for an apparatus to determine, based on this input audio, whether the password matches the registered password and whether the input voice matches the registered voice of the user. However, this approach is vulnerable to replay attacks where a bad actor records the user authenticating and later uses this recording to fraudulently gain access to the resource and/or service.

### Summary

According to a first aspect there is provided an apparatus comprising means for: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

In an example the apparatus authenticates the user in response to determining that the response consists of the at least one camouflage words and does not contain the at least one keyword.

In an example the at least one keyword is associated with the user.

In an example the request to authenticate a user is a request to access a resource and/or service on behalf of the user; and authenticating the user comprises granting access to the resource and/or service.

In an example the apparatus further comprises means for not authenticating the user in response to determining that the response contains the at least one keyword.

In an example the first part of the challenge comprises the whole of the challenge.

In an example the request to authenticate the user is received from a requestor and wherein authenticating the user comprises allowing the requestor to obtain access to resources and/or services on behalf of the user.

In an example a camouflage word is a word that is not a keyword.

In an example the keyword is a word.

In an example the at least one camouflage words do not include the keywords.

In an example the at least one keyword comprises a plurality of keywords, and wherein the means are further configured for: authenticating the user in response to determining that the response comprises the at least one camouflage words and does not include any of the plurality of keywords.

In an example does not include any of the plurality of keywords includes does not include each of the plurality of keywords.

In an example the apparatus further comprises means for: obtaining a passphrase associated with the user, wherein the passphrase comprises at least two keywords in a given order; generating the challenge, wherein the challenge comprises the at least two keywords; and authenticating the user in response to determining that the response comprises the at least one camouflage words and omits a keyword of the at least two keywords in the given order of the passphrase.

In an example the at least two keywords comprising the at least one keyword.

In an example the at least two keywords comprises the at least one keyword and a further keyword.

In an example the passphrase comprises a first keyword followed by a second keyword, the challenge comprises the first keyword followed by the second keyword, and the response comprises a sequence of words comprising a plurality of successive words; and the apparatus further comprises means for authenticating the user in response to determining that the first keyword is omitted from the sequence of words before the second keyword is omitted.

In an example the passphrase comprises a first keyword followed by a second keyword, the challenge comprises the second keyword followed by the first keyword, and the response comprises a sequence of words comprising a plurality of successive words; and the apparatus further comprises means for authenticating the user in response to determining that the second keyword is not omitted from the sequence of words and the first keyword is omitted from the sequence of words.

In an example the passphrase comprises a first keyword followed by the second keyword, the challenge comprises a first instance of the second keyword followed by the first keyword followed by the second instance of the second keyword, and the response comprises a sequence of words comprising a plurality of successive words; and the apparatus further comprises means for authenticating the user in response to determining that the first instance of the second keyword is not omitted from the sequence of words and the first keyword and the second instance of the second keyword is omitted from the sequence of words.

In an example the response comprises information identifying a vocal response to the challenge from the user and wherein the apparatus further comprises means for: performing speaker recognition on the information identifying the vocal response to determine an identity of the user; and authenticating the user in response to determining that: the response comprises the at least one camouflage word and omits at least one keyword; and the identity of the user corresponds to a registered user.

In an example the information identifying a vocal response to the challenge comprises a recording of speech generated by a user.

In an example performing speaker recognition further comprises comparing the information identifying the vocal response to the user's voice and/or a voiceprint.

In an example a registered user is a user that has been granted access to the resource and/or service.

In an example the challenge comprises a plurality of successive camouflage words at a start of the challenge; and wherein: performing speaker recognition on the information identifying the vocal response comprises performing speaker recognition on a part of the vocal response corresponding to the plurality of successive camouflage words.

In an example speaker recognition is performed using only the part of the vocal response corresponding to the plurality successive camouflage words.

In an example the challenge comprises the first part and a second part; communicating at least the first part of the challenge to the user comprises communicating the first part of the challenge to the user; receiving a response from the user comprises receiving a first response to the first part of the challenge; and the apparatus further comprises means for: communicating the second part of the challenge in response to determining that the first response satisfies a first authentication requirement.

In an example the apparatus further comprises means for generating a negative authentication decision in response to determining that the first response does not satisfy the first authentication requirement.

In an example generating a negative authentication decision comprises preventing the user from accessing the resource and/or service.

In an example the first response satisfies the first authentication requirement when the first response comprises only camouflage words. Optionally, when the first response comprises only and all the camouflage words in the first part of the challenge. Optionally, when the first response does not include at least one keyword.

In an example the first part of the challenge comprises only camouflage words; the first response comprises information identifying the vocal response to the first part of the challenge; and wherein the apparatus further comprises means for: performing speaker recognition on the information identifying the vocal response to determine an identity of the user; and determining that the first response satisfies the first authentication requirement when the identity of the user corresponds to a registered user.

In an example the identity of the user corresponds to a registered user when the vocal response to the first part of the challenge comprises voice information of the registered user. In an example the apparatus further comprises means for: receiving a second response from the user after communicating the second part of the response; and authenticating the user in response to determining that: the first response satisfies the first authentication requirement; and the second response satisfies the second authentication requirement.

In an example the second response satisfies the second authentication requirement when the second response comprises only camouflage words. In an example, the second response satisfies the second authentication requirement when the second response comprises only camouflage words included in the second part of the challenge.

In an example the request to authenticate the user comprises information identifying a second apparatus that generated the request and wherein the apparatus further comprises means for: authenticating the user in response to determining that the second apparatus that generated the request is associated with the user.

In an example authenticating the user in response to determining that response comprises the at least one camouflage words further comprises: authenticating the user in response to determining that the response comprises at least one camouflage words in an order that the at least one camouflage words appear in the challenge.

In an example the apparatus further comprises means for registering at least one credential of the user for use during authentication.

In an example registering the at least one credential comprises: obtaining the at least one keyword from the user; and registering the at least one keyword as a first credential of the user.

In an example registering the at least once credential further comprises: obtaining information identifying the voice characteristics of the user; and registering the information identifying the voice characteristics of the user as a second credential for use in speaker recognition; obtaining information identifying a first apparatus associated with the user; and registering the information identifying the first apparatus associated with the user as a third credential.

According to a second aspect there is provided an apparatus comprising: at least one processor; and at least one memory storing instructions that, when executed by the at least one processor, cause the apparatus at least to perform: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

According to a third aspect there is provided a system comprising: an apparatus as described above; and a second apparatus associated with the user, wherein the second apparatus comprises means for: transmitting a request, to the apparatus, to authenticate the user; receiving a challenge from the apparatus; providing the challenge to the user; obtaining the response to the challenge from the user; and transmitting the response to the apparatus.

In an example the second apparatus comprises an audio output means and providing the challenge to the user comprises outputting the challenge via the audio output means. Optionally, the audio output means is a speaker of the second apparatus or a set of headphones communicatively coupled to the second apparatus.

In an example the second apparatus comprises a display means and providing the challenge to the user comprises outputting the challenge via the display means.

In an example the second apparatus comprises an audio input means and obtaining the response to the challenge from the user comprises recording an output of the audio input means. Optionally, the audio input means is a microphone of the second apparatus or a microphone of a set of headphones communicatively coupled to the second apparatus.

In an example the second apparatus comprises a display means and obtaining the response to the challenge from the user comprises obtaining the response from an input provided to the display means.

According to a fourth aspect there is provided a method comprising: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

In an example the method is a computer-implemented method.

In an example a camouflage word is a word that is not a keyword.

In an example the at least one keyword comprises a plurality of keywords, and wherein the method further comprises: authenticating the user in response to determining that the response comprises the at least one camouflage words and does not include any of the plurality of keywords.

In an example the method further comprises: obtaining a passphrase associated with the user, wherein the passphrase comprises at least two keywords in a given order; generating the challenge, wherein the challenge comprises the at least two keywords; and authenticating the user in response to determining that the response comprises the at least one camouflage words and omits a keyword of the at least two keywords in the given order of the passphrase. In an example the response comprises information identifying a vocal response to the challenge from the user and wherein the method further comprises: performing speaker recognition on the information identifying the vocal response to determine an identity of the user; and authenticating the user in response to determining that: the response comprises the at least one camouflage word and omits at least one keyword; and the identity of the user corresponds to a registered user.

In an example the challenge comprises a plurality of successive camouflage words at a start of the challenge; and wherein performing speaker recognition on the information identifying the vocal response comprises performing speaker recognition on a part of the vocal response corresponding to the plurality of successive camouflage words.

In an example speaker recognition is performed using only the part of the vocal response corresponding to the plurality successive camouflage words.

In an example the challenge comprises the first part and a second part; communicating at least the first part of the challenge to the user comprises communicating the first part of the challenge to the user; receiving a response from the user comprises receiving a first response to the first part of the challenge; and the method further comprises: communicating the second part of the challenge in response to determining that the first response satisfies a first authentication requirement.

In an example the method further comprises generating a negative authentication decision in response to determining that the first response does not satisfy the first authentication requirement.

In an example the first response satisfies the first authentication requirement when the first response comprises only camouflage words.

In an example: the first part of the challenge comprises only camouflage words; the first response comprises information identifying the vocal response to the first part of the challenge; and wherein the method further comprises: performing speaker recognition on the information identifying the vocal response to determine an identity of the user; and determining that the first response satisfies the first authentication requirement when the identity of the user corresponds to a registered user.

In an example the method further comprises: receiving a second response from the user after communicating the second part of the response; and authenticating the user in response to determining that: the first response satisfies the first authentication requirement; and the second response satisfies the second authentication requirement.

In an example the second response satisfies the second authentication requirement when the second response comprises only camouflage words.

In an example: the request to authenticate the user comprises information identifying a second apparatus that generated the request and wherein the method further comprises: authenticating the user in response to determining that the second apparatus that generated the request is associated with the user.

In an example authenticating the user in response to determining that response comprises the at least one camouflage words further comprises: authenticating the user in response to determining that the response comprises at least one camouflage words in an order that the at least one camouflage words appear in the challenge.

In an example the method further comprises: registering at least one credential of the user for use during authentication.

In an example registering the at least one credential comprises: obtaining the at least one keyword from the user; and registering the at least one keyword as a first credential of the user.

In an example registering the at least once credential further comprises: obtaining information identifying the voice characteristics of the user; and registering the information identifying the voice characteristics of the user as a second credential for use in speaker recognition; obtaining information identifying a first apparatus associated with the user; and registering the information identifying the first apparatus associated with the user as a third credential.

According to a fifth aspect there is provided a non-transitory computer readable medium comprising program instructions stored thereon for performing at least the following: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

According to a sixth aspect there is provided a computer program comprising instructions which, when the program is executed by a computer, cause the computer to carry out at least the following: receiving a request to authenticate a user; obtaining a challenge, wherein the challenge comprises at least one keyword and at least one camouflage word; communicating at least a first part of the challenge to the user; receiving a response from the user; and authenticating the user in response to determining that the response comprises the at least one camouflage word and does not include at least one keyword.

### Brief Description of the Drawings

Some examples will now be described with reference to the accompanying drawings in which:
Fig. 1 shows a system according to an example;
Fig. 2 shows an authentication method according to an example;
Fig. 3A shows a method for registering a credential according to a first example;
Fig. 3B shows a plurality of keywords according to a first example;
Fig. 3C shows a method for registering a plurality of credentials according to a second example;
Fig. 4A shows a method of authenticating a user according to an example;
Fig. 4B shows data used in a first authentication variant according to an example;
Fig. 4C shows a method of determining an authentication decision using single factor authentication according to an example;
Fig. 4D shows data used in a second authentication variant according to an example;
Fig. 4E shows a method of determining an authentication decision using two factor authentication according to an example;
Fig. 4F shows data used in a third authentication variant according to an example;
Fig. 5A shows data used in a multi-part authentication method according to an example;
Fig. 5B shows a method of authenticating a user with a multi-part challenge according to an example;
Fig. 5C shows a method of two-factor authentication using a multi-part challenge according to an example;
Fig. 5D shows data used in a fourth authentication variant according to an example;
Fig. 6 shows an authentication system according to an example;
Fig. 7 shows a method of operating an authentication system 600 according to an example;
Fig. 8 shows an authentication method using three factor authentication according to an example;
Fig. 9 shows an implementation of the first apparatus 102 according to an example.

In the figures same reference numerals denote same functionality/components.

### Detailed Description

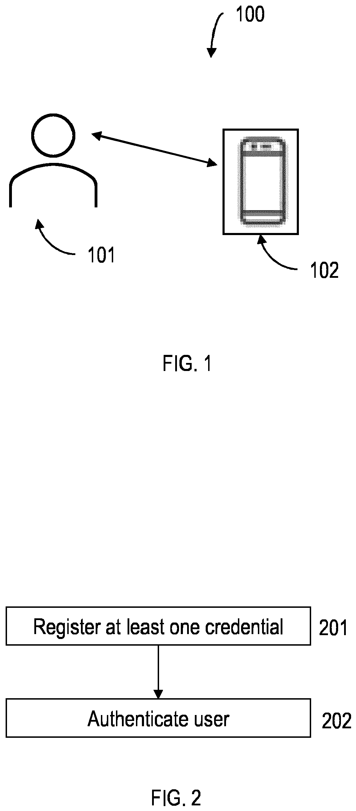

Fig. 1 shows a system according to an example. In particular, Fig. 1 shows a system 100 comprising a user 101 and a first apparatus 102. In an example, the first apparatus 102 is implemented using a smartphone. The first apparatus 102 is configured to communicate with the user 101 (e.g., by being configured to output information to, and receive input information from, the user 101). In an example, the first apparatus 102 is configured to perform the authentication methods described herein to control access to a resource and/or a service. In an example, the user 101 has to be authenticated before the first apparatus 102 grants the user 101 access to resource and/or service. An example implementation of the first apparatus 102 is discussed at the end of the description.

Although in the following part of the description the methods are described with reference to an example where a single device (e.g., the first apparatus 102) performs the methods it is emphasised, for the avoidance of any doubt, that the methods are not limited to being carried out by a single device. In other examples the methods are implemented using more than one apparatus (e.g. where parts of the methods are implemented by a (remote) server).

Fig. 2 shows an authentication method according to an example. The method begins in step 201 where at least one credential is registered by the user 101 for use during authentication.

In an example a first credential includes a plurality of keywords. The plurality of keywords (i.e. the more than one keywords) form a password which is used during authentication. A keyword is a word (i.e., single distinct meaningful element of writing) and comprises one or more characters. The plurality of keywords comprises more than one keywords (e.g., two or more keywords). Various methods for registering the credentials of the user 101 will now be discussed in detail.

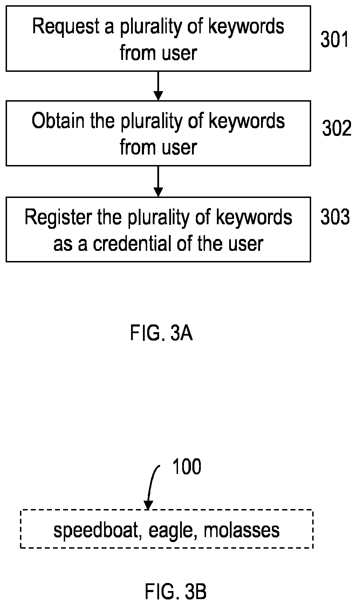

Fig. 3A shows a method for registering a credential according to a first example. In step 301 a plurality of keywords are requested from the user 101. In an example, the user 101 is requested (e.g. via a display means and/or an audio output means (e.g. a speaker) of the first apparatus 102) to provide the plurality of keywords. The method proceeds to step 302.

In step 302 the plurality of keywords are obtained from the user 101. In an example, the plurality of keywords are obtained via an input means of the first apparatus 102 (e.g. the display means and/or an audio input means (e.g. a microphone)). The method proceeds to step 303.

In step 303 the plurality of keywords are registered as a credential of the user 101. In an example information indicating the plurality of keywords (e.g. the keywords or a hash of the keywords) is stored in association with information identifying the user (e.g. a username or user identification number). In an example the information identifying the user and the plurality of keywords are stored together in a database. In an example registering the plurality of keywords also comprises recording the order of the keywords provided by the user. As will be discussed below, an ordered set of keywords is referred to herein as a passphrase.

Fig. 3B shows a plurality of keywords according to a first example. In particular, Fig. 3B shows the plurality of keywords comprising the words: *"speedboat", "eagle", "molasses".* In the example where the order of the plurality of keywords is also recorded, an indication that the 1^{st} word is *"speedboat",* the 2^{nd} word is *"eagle"* and the 3^{rd} word is *"molasses"* would be recorded. In this illustrative example the plurality of keywords comprises three keywords (i.e. *n* = 3). However, for the avoidance of doubt it is emphasised that in other examples the plurality of keywords comprises any number of keywords greater than or equal to two (i.e. n ≥ 2).

The method of Fig. 3A shows a method of registering a single credential, namely the plurality of keywords. The stored credential can be used for single-factor authentication. In this case, a user has to prove what they know (i.e. knowledge of the plurality of keywords) in order to be authenticated. As will be apparent from the description below, the authentication methods described herein can also be used for multi-factor authentication including, but not limited to two-factor or three-factor authentication. Consequently, there is also provided a method for registering more than one credential for use in multi-factor authentication.

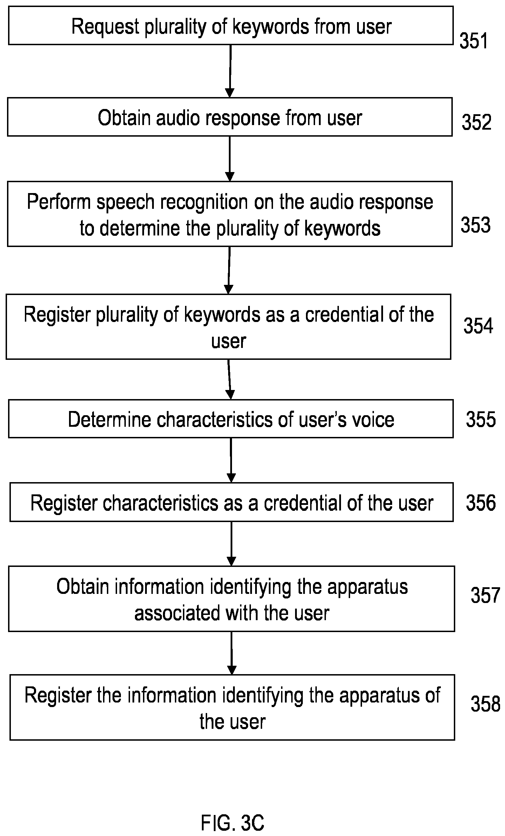

Fig. 3C shows a method for registering a plurality of credentials according to a second example. Fig. 3C begins in step 351. In step 351 a plurality of keywords is requested from the user. In an example, the user is requested to speak the plurality of keywords that it wants to use as a credential for future authentication requests. For example, the user is prompted via a display means of the first apparatus 102 to speak the plurality of keywords. The method proceeds to step 352.

In step 352 the audio response from the user is obtained. In an example, audio data comprising the spoken plurality of keywords is captured by an audio input means (e.g. a microphone) of the first apparatus 102. The method proceeds to step 353.

In step 353 speech recognition is performed on the audio response to determine the plurality of keywords. Using the example of Fig. 3B, in step 353 the speech recognised in the audio response from the user comprises the keywords: *"speedboat", "eagle", "molasses".* The method proceeds to step 354.

In step 354 the plurality of keywords (determined in step 353) are registered as a credential of the user. For example, an association between information identifying the user and information identifying the plurality of keywords is registered for later use during authentication. In this example, the plurality of keywords represents the first credential and is information that the user *"knows".* The method proceeds to step 355.

In step 355 the characteristics of the user's voice are determined. In an example, the characteristics of the user's voice are generated from the audio response obtained in step 352. In an example, determining the characteristics of the user's voice comprises enrolling for speaker recognition. Speaker recognition is the task of identifying a person from the characteristics of their voice. Speaker recognition includes two phases, enrolment and verification. During enrolment the characteristics of the user's voice are obtained for future use during verification. In an example determining the characteristics of the user's voice comprises generating an acoustic model of the user's voice by extracting features from the user's voice to generate a voiceprint, template, or model. The method proceeds to step 356.

In step 356 the determined characteristics of the user's voice are registered in. In an example, the characteristics of the user's voice are stored in association with information identifying the user (e.g. a username) and information identifying the first credential (i.e. the plurality of keywords). Consequently, during step 356 a second credential of the user is registered/recorded. The second credential is something that the user "is" (i.e., a biometric characteristic of the user, namely information identifying the characteristics of the user's voice).

Optionally, the method also includes registering a third credential of the user. In this example, the method proceeds to step 357 after completing step 356.

In step 357 information identifying the apparatus of the user is obtained. In an example, the information identifying the apparatus of the user comprises a unique identification number. In an example the apparatus is the first apparatus 102 that the user uses to input the plurality of keywords. After obtaining information identifying the apparatus associated with the user the method proceeds to step 358.

In step 358 the information identifying the apparatus is registered as a third credential of the user. In an example, the information identifying the apparatus of the user is stored in association with the plurality of keywords known by the user and the acoustic information of the user. This is a third credential of the user and represents something the user *"has".*

After completing step 358 the user has registered three credentials. The first credential being obtained from completing steps 353 and 354. The second credential being obtained from completing steps 355 and 356. The third credential being obtained from completing steps 357 and 358.

It will be appreciated that registering credential can be considered separate steps. Consequently, the steps can be combined in different ways when the registration phase is used for registering two credentials. For example, in the case that the registration stage is for two credentials, namely something the user *"knows"* and something the user "is" then steps 357 and 358 (i.e. the steps required to register something the user "has") are omitted from the method of Fig. 3C.

Returning to Fig. 2. After registering at least one credential in step 201 the method proceeds to step 202. In step 202 the authentication of the user is performed. In an example there is a delay between completing step 201 (i.e. registration) and step 202 (i.e. authentication).

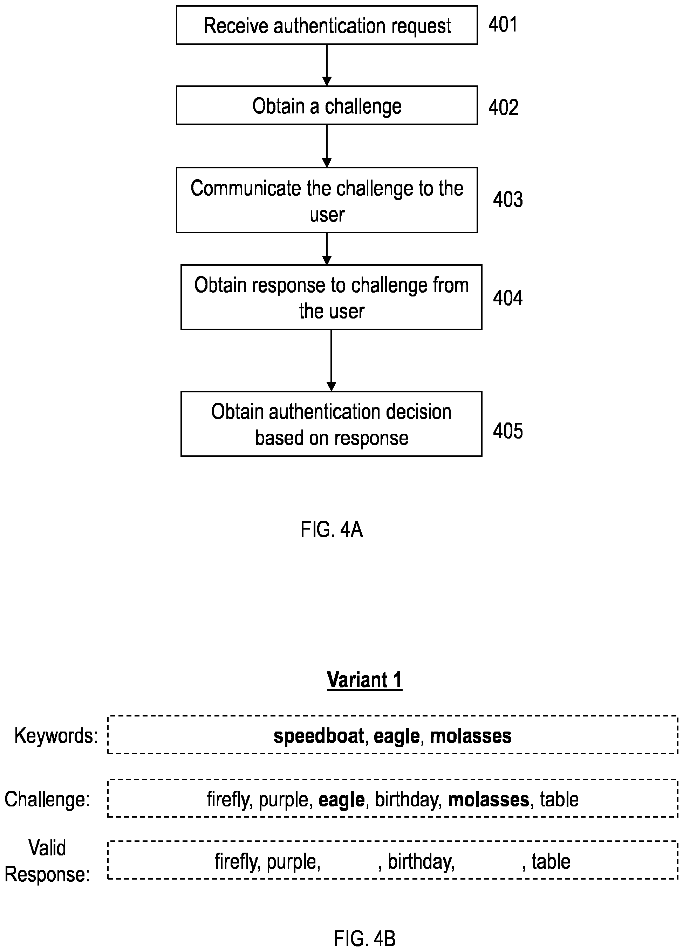

Fig. 4A shows a method of authenticating a user according to an example. In step 401 an authentication requested is received. In an example, the authentication request is generated by the user 101 of the first apparatus 102. In an example, the method of Fig. 4A is undertaken after the user 101 has registered at least a plurality of keywords as a credential for use during authentication.

Fig. 4B shows data used in a first authentication variant according to an example. In particular, Fig. 4B shows a plurality of keywords registered by the user 101 for use during authentication.

The plurality of keywords comprises the words: *"speedboat, eagle, molasses".*

Returning to Fig. 4A, after generating the authentication request in step 401, the method proceeds to step 402. In step 402 a challenge is obtained. In the example of Fig. 4B, the challenge comprises the words: *"firefly, purple, eagle, birthday, molasses, table".*

The challenge comprises a plurality of words. The challenge comprises one or more keywords (registered by the user 101 as a first credential for authentication) and one or more camouflage words. A camouflage word is a word that is not the same as a keyword. In the example of Fig. 4B, the one or more keywords include the words: *"eagle, molasses"* and the one or more camouflage words include the words: *"firefly, purple, birthday, table".*

In an example the challenge includes one or more (but not all) keywords. In other examples, the challenge includes all keywords.

Returning to Fig. 4A, in step 403 the challenge is communicated to the user 101 attempting to authenticate. In an example communicating the challenge to the user comprises displaying (e.g. on a display means of the first apparatus) at least a part of the challenge. In a specific example step 403 comprises displaying the whole challenge at the first apparatus 102. In other examples the challenge is communicated to the user using an audio output means. In a specific example the challenge is communicated (e.g. by being converted into audio speech, and played) via headphones that are worn by the user 101. The method proceeds to step 404.

In step 404 a response to the challenge is obtained from the user. In an example, the response is generated based on an output of an audio input means (e.g. a microphone) of the first apparatus 102. In a specific example obtaining the response comprises obtaining an output of the audio input means and converting the output into a text representation (e.g. using speech recognition techniques). After obtaining the response to the challenge, the method proceeds to step 405.

In step 405 an authentication decision is obtained based on the response (obtained in step 404). A method of obtaining the authentication decision will now be discussed in more detail.

In the examples described herein, the user attempting to authenticate proves knowledge of the keywords (i.e. the first credential) by omission. Specifically, the user proves they know the keywords by omitting (i.e. not including) the key words in the response to the challenge. More specifically, in some authentication methods described herein the user is considered to have demonstrated knowledge of the keywords if the response to the challenge comprises only and all camouflage words (i.e. the user is considered to prove knowledge of the keywords if the response to the challenge does not contain any keywords and contains all of the camouflage words from the challenge).

An example valid response is shown in the example of Fig. 4B. In the example of Fig. 4B, a valid response (i.e. a response that proves the user knows the keywords, and therefore can be authenticated) is: *"firefly, purple, birthday, table".* As will be appreciated this response does not contain any keywords and contains all of the camouflage words present in the challenge.

Specific details of the authentication method will be discussed in more detail below. However, it will be appreciated that proving knowledge of the keywords by omission has a number of advantages. For example, with this approach the user 101 attempting authentication can speak the response to the challenge in a public space. This is because, even if the response is overheard (e.g. by a bad actor), the sensitive knowledge required for authentication (i.e. knowledge of the keywords) is not obtained.

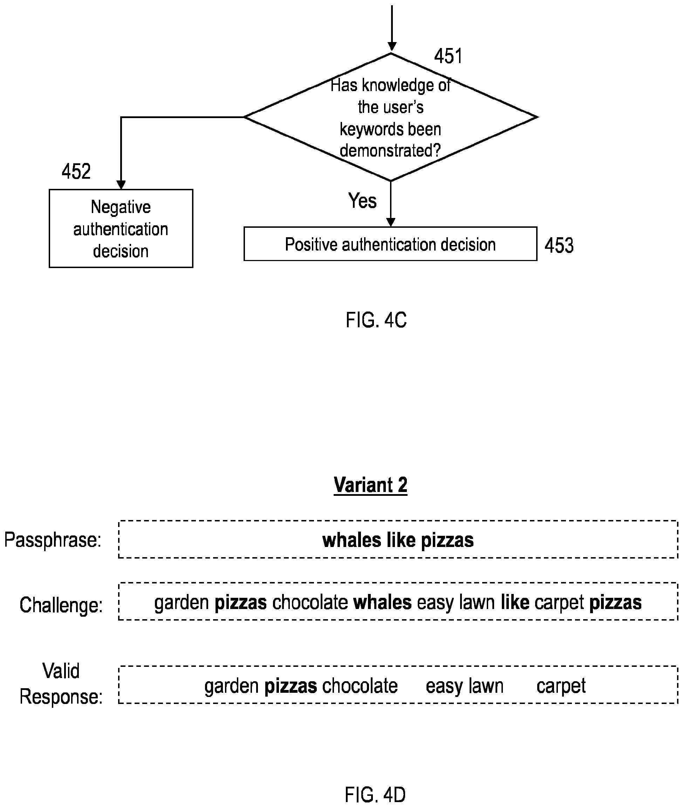

Fig. 4C shows a method of determining an authentication decision using single factor authentication according to an example. The method begins in step 451 after obtaining the response to the challenge (i.e. after step 404). In the example method of Fig. 4C the response to the challenge comprises: information identifying the response to the challenge (e.g. a text representation of the response generated by the user). In the example of Fig. 4C, determining the authentication decision comprises performing a single factor authentication.

In step 451 it is determined whether knowledge of the user's registered keywords has been demonstrated from the received response to the challenge.

There are various ways to demonstrate knowledge of the user's registered keywords. The specific test used to determine whether knowledge of user's keywords has been demonstrated depends on the variant of the authentication scheme used. In an example, the variant of the authentication scheme being used is predetermined and/or agreed when registering the user's credentials.

Some of the variants will now be discussed in detail. Although each variant differs in terms of the criteria required to prove knowledge of the user's keywords, each of the variants are linked by a common theme, namely that knowledge of the user's keywords is demonstrated by omitting the at least one of user's keywords from the plurality of words presented to the user in the challenge.

A first variant of the authentication scheme was discussed above in relation to Fig. 4B. In the first variant, knowledge of the user's keywords is demonstrated by providing a response that includes all of the camouflage words in the challenge, optionally in the order that the camouflage words appear in the challenge, and does not include any keywords. Consequently, when the first variant of the authentication scheme is used, step 451 comprises determining whether the response comprises all of the camouflage words present in the challenge and none of the user's keywords that were present in the challenge.

In an example, camouflage words should be repeated in the response in the same order that they appear in the challenge. For example, "firefly", which is word 1 in the challenge, should be included as word 1 of the response.

If, in step 451 of Fig. 4C, it is determined that knowledge of the user's keywords has not been demonstrated then the method proceeds to step 452 where a negative authentication decision is generated, thereby preventing access to the requested resource and/or service. If, in step 451, it is determined that knowledge of the user's keywords has been demonstrated, then the method proceeds to step 453 where a positive authentication decision is generated, thereby permitting access to the requested resource and/or service.

Fig. 4D shows data used in a second authentication variant according to an example. In the second authentication variant, knowledge of the order in which the keywords were registered is also used. Or put in other words, in the second variant, it is determined whether the user has demonstrated knowledge of the user's passphrase. A passphrase is an ordered combination of one or more keywords (i.e., a sequence of keywords). For example, the passphrase *"whales like pizza"* is different to the passphrase *"pizzas like whales"* because the order of the keywords is different. When the second authentication variant is used, the method of registering credentials is adapted to also record the order of the plurality of keywords.

In the example of Fig. 4D the passphrase (i.e. the plurality of keywords and their order) registered by the user is *"whales like pizzas"* and the challenge is *"garden pizzas chocolate whales easy lawn like carpet pizzas".*

In the second authentication variant knowledge of the user's passphrase is demonstrated by providing a response where the keywords are omitted in the order that they were registered in. Or put in other words, in order to demonstrate knowledge of the user's passphrase the response must contain all of the words included in the challenge apart from the passphrase (i.e. the ordered combination of keywords).

For example, Fig. 4D shows a challenge comprising the words: pizzas (word 2), whales (word 4), like (at word 7), pizzas (at word 9). The pass phrase is "whales like pizzas". Consequently, the valid response comprises all of the words included in the challenge apart from the keywords which should be omitted in the order they were registered in (i.e. apart from: whales (word 4), like (word 7), pizzas (word 9)). The response includes the word "pizzas" (at word 2) because pizzas is the third word of the key phrase. Consequently, it is proper to include pizzas in the response since it demonstrates that the responder knows the order of the passphrase (i.e. it shows that the user knows the word "pizzas" should only be omitted after omitting the word "like").

In an example, camouflage words should be repeated in the response in the same order that they appear in the challenge. For example, "garden", which is word 1 in the challenge, should be included as word 1 of the response.

In summary, in order to demonstrate knowledge of the user's passphrase, key words are omitted from the challenge in the order that they were registered. Consequently, the response is valid when the response omits the passphrase from the challenge (i.e. omits the words of the passphrase in the order that they were registered).

Consequently, when the second authentication variant is being used, step 451 of Fig. 4C comprises determining whether knowledge of the user's passphrase has been demonstrated and demonstrating knowledge of the user's passphrase comprises determining whether the response comprises all of the words in the challenge, in the order they appear in the challenge, apart from the key phrase (i.e. contains the words of the challenge, in the order of the challenge, with the words of the passphrase being omitted in the order that they were registered - without omitting words of the passphrase that are present out of the registered order).

The method of Fig. 4C enables single factor authentication. In this case knowledge of the registered key words (or passphrase) is used as the credential. There are also provided methods of performing multi-factor authentication.

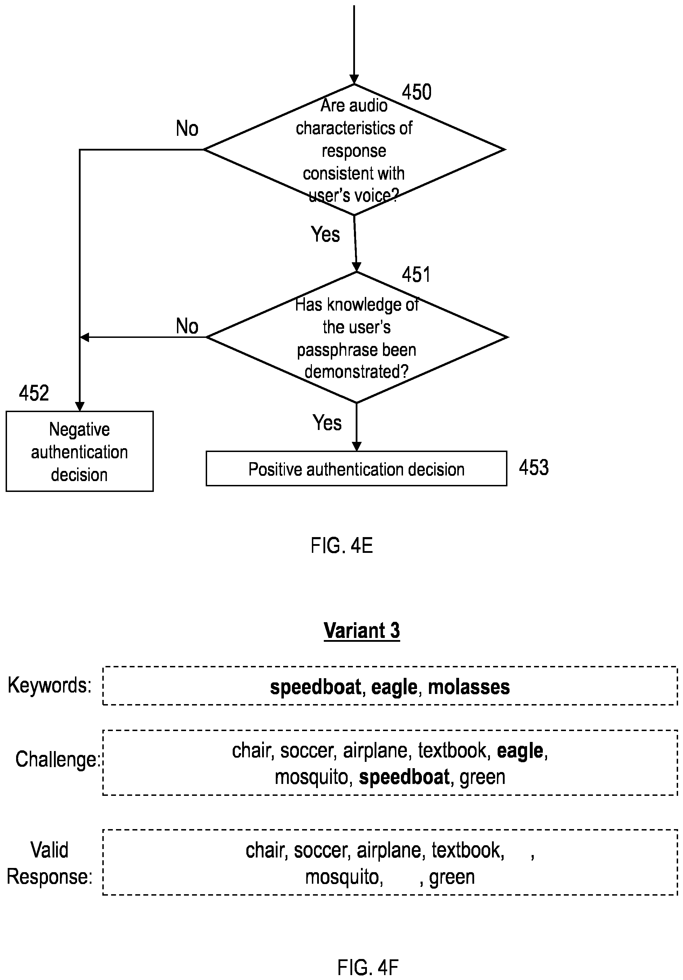

Fig. 4E shows a method of determining an authentication decision using two factor authentication according to an example. The method begins in step 450 after obtaining the response to the challenge (i.e. after step 404). In the example method of Fig. 4E the response to the challenge comprises information identifying the audio response to the challenge (e.g. the audio response generated by the user). In the example of Fig. 4E, determining the authentication decision comprises performing a two factor authentication, those two factors being testing: something the user knows (i.e. knowledge of the keywords) and something the user is (i.e. biometrics (e.g. voice characteristics) associated with the registered user).

In step 450 it is determined if the audio characteristics of the response are consistent with the characteristics of the user's voice obtained during the registration phase. In an example, step 450 comprises performing speaker recognition on the audio response. In an example step 450 comprises determining if the voice print of the response matches or is similar to the voice print of the user.

If it is determined that the audio characteristics are not consistent with the user's voice then the method proceeds to step 452 where a negative authentication decision is reached and the user is prevented from accessing the resource and/or service. If, on the other hand, it is determined in step 450 that the audio characteristics of the response are consistent with the audio characteristics of the user, the method proceeds to step 451 where knowledge of the user's keywords/passphrase is tested (e.g. as described in relation to Fig. 4C).

Knowledge is tested in the same ways as described in relation to Fig. 4C and can be tested using the first variant (Fig. 4B) or the second variant (Fig. 4D). Since these steps have already been described, a detailed discussion will be omitted for brevity.

In other examples knowledge of the user's passphrase is tested before determining whether the audio characteristics of the response are consistent with the user's voice (i.e. steps 450 and 451 are reversed).

In the method of Fig. 4E a positive authentication decision is generated in step 453 in response to determining that the audio characteristics of the response are consistent with the registered user's audio characteristics and knowledge of the registered user's key words/passphrase has been demonstrated.

Fig. 4F shows data used in a third authentication variant according to an example. In the third authentication variant the challenge comprises at least n camouflage words before the first occurrence of a keyword, where *n* is an integer greater than or equal to one. Advantageously, ensuring the challenge has a number of successive camouflage words (which should be spoken as the first n words in a valid response) enables an authentication decision to be reached quicker.

In an example n (the number of successive camouflage words at the start of the challenge) is equal to 4. Consequently, in a valid response there will be 4 spoken words before occurrence of the first keyword (which should be omitted - i.e. not spoken in a valid response). Having a number of successive camouflage words enables an authentication decision to be reached more efficiently because the analysis of the requestor's biometric information can now be treated as a discrete step to analysis of the requestor's knowledge.

This example is shown in Fig. 4F, which shows a user with keywords: *speedboat, eagle, molasses* and a challenge being provided to the user being: *chair, soccer, airplane, textbook, eagle, mosquito, speedboat, green.* As will be apparent, there are *n* = 4 camouflage words provided at the start of the challenge before the first keyword (i.e. *eagle).*

In the example of Fig. 4F a valid response comprises all of the words from the challenge, in the order of they appear in the challenge, apart from the registered keywords (which are omitted). This follows the rule discussed in relation the first variant (i.e. Fig. 4B). However, for the avoidance of any doubt it is emphasized that in other examples the technique of having at least n camouflage words at the start of the challenge is also used in conjunction with variant 2 (i.e. Fig. 4D), where a valid response comprises all of the words in the challenge with the pass phrase omitted.

In the examples above, the whole of the challenge is communicated to the user before a response is received. There is also provided an example where the challenge is provided in multiple parts, where a response is expected after communicating each part of the challenge and a successive challenge is only communicated if the previous response is consistent with the expected response.

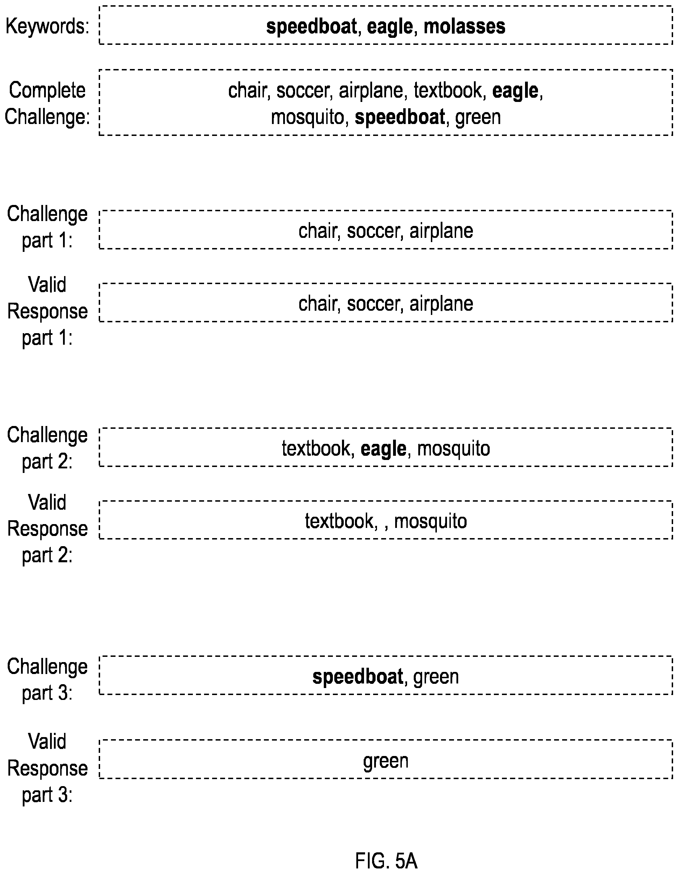

Fig. 5A shows data used in a multi-part authentication method according to an example. In the example of Fig. 5A the registered keywords are: *"speedboat, eagle, molasses"* and the complete challenge is: *"chair, soccer, airplane, textbook, eagle, mosquito, speedboat, green".*

In the example of Fig. 5A the multi-part challenge comprises 3 words in each part of the challenge. However, for the avoidance of any doubt it is emphasized that a different number of words could be present in each challenge part. In other examples the number of words per part of the challenge is at least one word.

In the example of Fig. 5A a valid response is shown. The valid response is for the case where the information known by the registered user is a set of keywords. However, It will be appreciated that a multi-part challenge can also be used when the registered user uses a passphrase. In this case, the order that keywords are omitted from the response does matter.

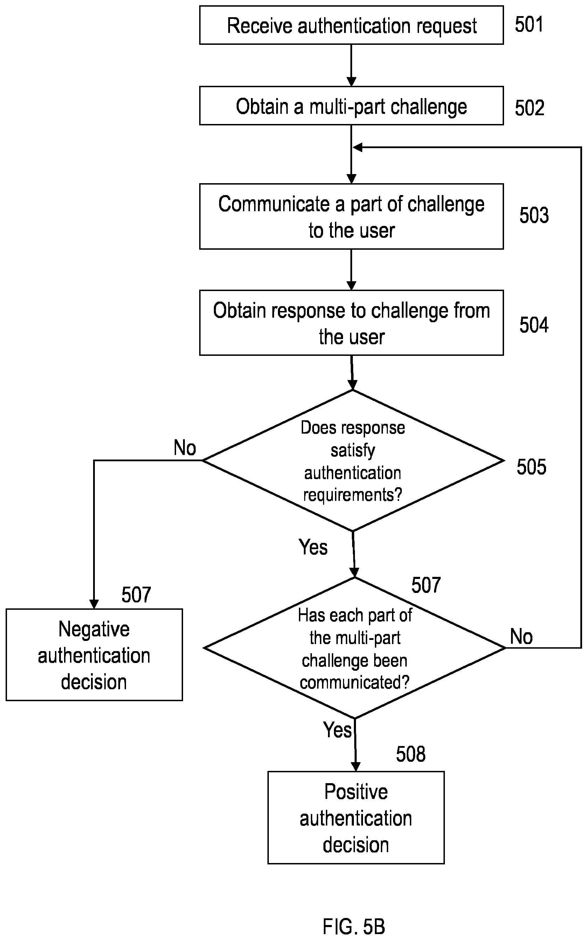

Fig. 5B shows a method of authenticating a user with a multi-part challenge according to an example. The method begins in step 501 when an authentication request is received (e.g. from the user 101). The method proceeds to step 502.

In step 502 a multi-part challenge is obtained. The multi-part challenge comprises a plurality of distinct challenges. Each challenge comprising at least one word. As discussed above in relation to Fig. 4A, the challenge comprises at least part of the registered keywords/passphrase for the user and one or more camouflage words. In an example, the multi-part challenge is obtained by separating a (whole/complete) challenge into a plurality of parts.

In the example data shown in Fig. 5A, the complete challenge is separated into three parts. However, in other examples the number of parts is any number greater than or equal to two.

In the example of Fig. 5A the first part of the challenge comprises the words: *"chair, soccer, airplane",* the second part of the challenge comprises the words: *"textbook, eagle, mosquito",* and the third part of the challenge comprises the words: *"speedboat, green".* After obtaining the multi-part challenge in step 502, the method proceeds to step 503.

In step 503 a part of the challenge is communicated to the user. In an example, the first part of the challenge is communicated to the user (e.g., using the same output means as described in relation to 403 of Fig. 4A). The method proceeds to step 504.

In step 504 a response is obtained to the first part of the challenge. In an example the response is in text format. In another example the response comprises audio information of the requesting user. The method proceeds to step 505.

In step 505 it is determined whether the response (obtained in step 504) satisfies the authentication requirements.

In the case of single-factor authentication, step 505 comprises determining whether the user has demonstrated knowledge of the user's keywords/passphrase based on the response. In an example step 505 includes performing the determinations described in relation to step 451 of Fig. 4C (discussed above).

In the case of two-factor authentication, step 505 comprises determining whether the requestor's audio response is consistent with the audio characteristics of the registered user, and also determining if knowledge of the user's keywords/passphrase has been demonstrated. In this example, step 505 involves performing the determinations discussed in relation to steps 450 and 451 of Fig. 4E (discussed above).

If it is determined in step 505 that the part of the response does not satisfy the authentication requirements (i.e. the user has not proved knowledge of the keywords/passphrase and/or the requestor's audio characteristics are not consistent with the registered user) then the method proceeds to step 507 where a negative authentication decision is generated (i.e. the requestor is prevented from accessing the resource and/or service).

If it is determined in step 505 that the part of the response does satisfy the authentication requirements (the user has proved knowledge of the keywords/passphrase and (depending on the number of factors being used) the requestor's audio characteristics are consistent with the registered user) then the method proceeds to step 507.

In step 507 it is determined if each part of the multi-part challenge has been communicated to the user. In response to determining that each part of the challenge has been communicated, the method proceeds to step 508 where a positive authentication decision is generated (i.e. the requestor is granted access to the resource/service).

If it is determined in step 507 that each part of the multi-part challenge has not been communicated to the user, then the method proceeds to step 503 where a different (not previously communicated) part of the multi-part challenge is communicated to the user.

Advantageously, the authentication method is more resilient to an attack when using a multi-part challenge. For example, if enough complete challenges are provided and a bad actor knows that the challenge includes the passphrase/keywords it may be possible to guess the passphrase/keywords based on the common words present in the challenges. By using a multi-part challenge and requesting a response for each part, the authentication method can stop an authentication attempt as soon as it is determined that the requestor has not satisfied the authentication requirements. For example, it could be determined that the requestor does not have knowledge of the user's passphrase based on the first part of the multi-part challenge alone. Consequently, the authentication request can be rejected without providing other parts of the challenge, thereby making it harder for a bad actor to identify common words included in the challenge.

There is also provided a modified version of the method of Fig. 5B for use when using two-factor authentication (i.e. determining the requestor's audio characteristics and knowledge are consistent with the user's data).

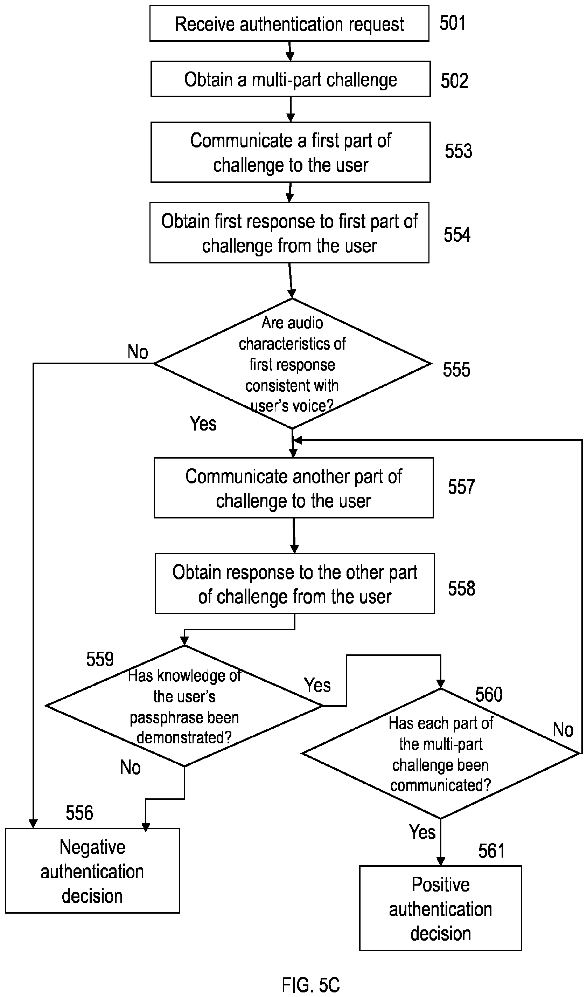

Fig. 5C shows a method of two-factor authentication using a multi-part challenge according to an example. As in Fig. 5B (discussed above), the method starts in step 501 by receiving an authentication request and proceeds to step 502.

In step 502 a multi-part challenge is obtained. In an example, the multi-part challenge comprises a first part and one or more other parts. In the example of Fig. 5C, the first part of the multi-part challenge comprises only camouflage words (i.e. words that are not keywords and/or part of the passphrase). In contrast, the one or more other parts of the multi-part challenge comprises at least one of the keywords and/or part of the passphrase.

As will be apparent from the description below, using a multi-part challenge where the first part of the challenge contains only camouflage words enables voice authentication to be performed before revealing any of the keywords/passphrase in the challenge. This enables the authentication to be terminated early if it is determined, based on the audio data alone, that the requesting user is not the registered user, without revealing any keywords/passphrase.

After obtaining the multi-part challenge the method proceeds to step 553. In step 553 the first part of the challenge is communicated to the user 101 (e.g. by being presented on a user interface of the first apparatus 102 associated with a user 101, or being output as audio such that the user 101 can hear the challenge).

In the example of Fig. 5C the first part of the challenge comprises only camouflage words (i.e. words that are not keywords or part of the passphrase). In an example the first part of the challenge comprises one or more camouflage words. In an example the first part of the challenge comprises at least n camouflage words, where *n* is the minimum number of words required for voice authentication (i.e. determining whether the requesting user matches the audio characteristics of a registered user). After communicating the first part of the challenge in step 553, the method proceeds to step 554.

In step 554 the first response is obtained from the user. The first response is provided by the user responsive to receiving the first part of the challenge. Since the first part of the challenge only comprises camouflage words, the first response should contain the same words as the first part of the challenge (optionally in the same order as the challenge). As discussed above in relation to two-factor authentication, the first response comprises information identifying the audio response generated by the user. The method proceeds to step 555.

In step 555 it is determined whether the audio characteristics of the first response are consistent with the registered user's voice. The same techniques as described in relation to Fig. 4E are used for this determination. As a result, a detailed discussion is omitted for brevity.

If, in step 555 it is determined that the audio characteristics of the requesting user are not consistent with the registered user, the method proceeds to step 556 where a negative authentication decision is generated (i.e. the requesting user is not permitted to access the requested resource and/or service). If in step 555 it is determined that the audio characteristics of the first response are consistent with the registered user, the method proceeds to step 557.

In step 557 another part of the multi-part challenge is communicated to the user (i.e. a part from the one or more other parts of the multi-part challenge, not the first part of the challenge that has already been communicated in step 553). The method proceeds to step 558.

In step 558 the response to other part of the multi-part challenge is obtained. After obtaining the response the method proceeds to step 559.

In step 559 it is determined whether knowledge of the user's keywords/passphrase has been determined. This step is the same as step 451 of Fig. 4E, so a detailed discussion will be omitted for brevity.

If it is determined in step 559 that knowledge of the user's keywords/passphrase has not been demonstrated, the method proceeds to step 556 where a negative authentication decision is generated (i.e. the requesting user is not permitted to access the requested resource and/or service). In this case, the authentication method is terminated before serving the remaining parts of the multi-part challenge. If in step 559 it is determined that the requesting user has demonstrated knowledge of the user's keywords/passphrase (for that part of the multi-part challenge), then the method proceeds to step 560.

In step 560 it is determined whether each part of the multi-part challenge has been communicated to the user. If it is determined that each part of the multi-part challenge has not yet been communicated to the user, then the method proceeds to step 557 where another part of the multi-part challenge (that has not already been communicated to the user) is then communicated to the user. If it is determined in step 560 that each part of the multi-part challenge has been communicated to the user, then the method proceeds to step 561 where a positive authentication decision is generated (i.e. the requesting user is granted access to the requested resource and/or service).

In the example of Fig. 5B and Fig. 5C, when it is determined that the response does not satisfy the authentication requirements, a negative authentication decision is generated. See for example step 505 of Fig. 5B and steps 555 and 559 of Fig. 5C. In another example, after determining that the authentication requirements have not been satisfied, instead of generating a negative authentication, the methods comprise generating a challenge containing only camouflage words and communicating the challenge to the user. In an example challenges containing only camouflage words continue to be communicated (responsive to receiving the response from the user 101) until a challenge of the same length as the original multi-part challenge has been communicated. In this way, a bad actor cannot determine whether or not an attempt to guess a keyword was successful based on the early termination of the authentication challenge.

In the above examples security is improved by defensive curtailment of the authentication sequence (e.g. Fig. 5B) or by performing speaker authentication before providing keywords in the challenge (e.g. Fig. 5C). In another example, there is also provided an authentication variant that is more robust to potential attacks by a bad actor.

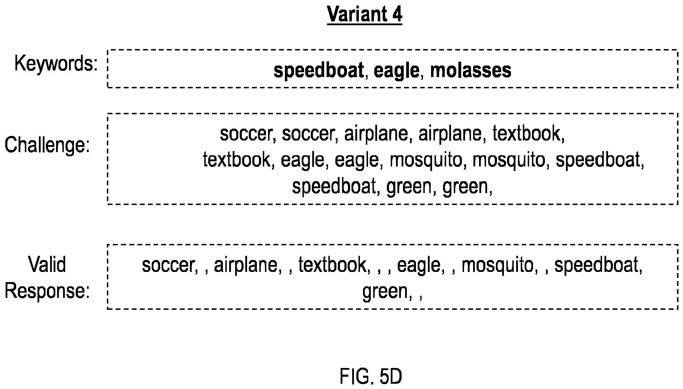

Fig. 5D shows data used in a fourth authentication variant according to an example. In an example, the authentication variant is used in the methods of Fig. 4C and/or Fig. 4E. In the example of Fig. 5D, the keywords are: *"speedboat, eagle, molasses".* In the example of Fig. 5D, the challenge comprises the words: *"soccer, soccer, airplane, airplane, textbook, textbook, eagle, eagle, mosquito, mosquito, speedboat, speedboat, green, green, ".*

In the example of Fig. 5D, the challenge comprises at least one keyword and at least one camouflage words, both repeated more than one time (i.e. such that each word is associated with more than one repeated instance). For example, the challenge in Fig. 5D comprises the camouflage word *"soccer"* repeated twice. The challenge in Fig. 5D also comprises the key word *"speedboat"* repeated twice. In the example of Fig. 5D, the user 101 proves knowledge of the keywords if the user 101 including the first instance of a camouflage word and including the second instance of a keyword (while omitting the second instance of the camouflage words and the first instance of the keyword in the response).

As will be appreciated, in the example where the words of the challenge are issued to the user 101 one word at a time (i.e. where the number of words in each part of the multi-part challenge is one), a pause (or non-response) to the challenge can be easily identified.

In the example of Fig. 5D the valid response is: "soccer, , airplane, , textbook, , , eagle, , mosquito, , speedboat, green, ,", where ", ," represents a pause or no response to the challenge word.

In a further example, in order to prevent an attacker from learning keywords by their positions with respect to pauses, the time between communicating challenge words is varied. In this way, the response by the user 101 will also be varied to prevent the attacker from knowing if the communicated word is the first instance or the second instance of the word.

In the examples above, the first apparatus 102 (e.g. the smartphone) is configured to perform the above-described method. For example, by generating the challenge, communicating the challenge to a user, obtaining a response from the user and granting or denying access to a resource and/or service based on the response. In other examples, there is provided a system additionally comprising a server that performs part of the authentication method.

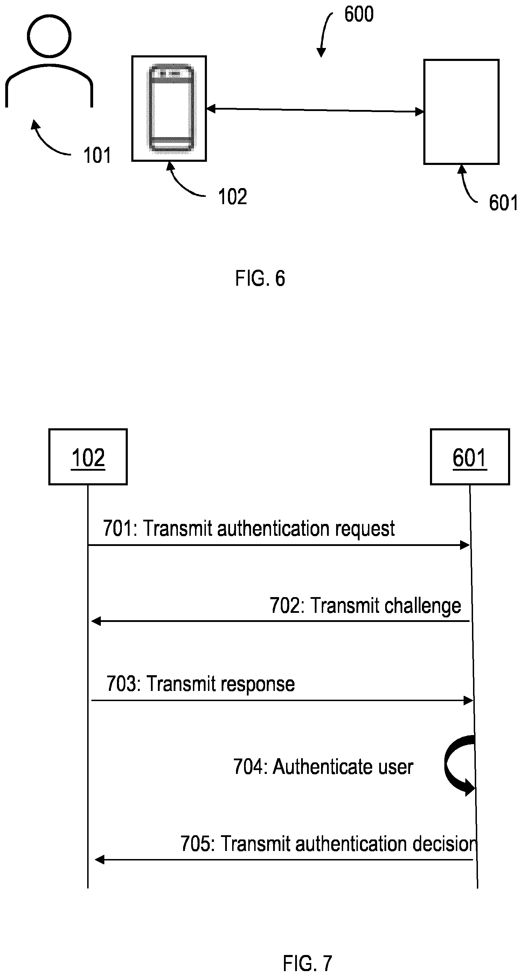

Fig. 6 shows an authentication system according to an example. The authentication system 600 comprises the first apparatus 102 (e.g. a smartphone) associated with the user 101 and a second apparatus 601. The second apparatus 601 is communicatively coupled to the first apparatus 102. In an example the second apparatus 601 is server. In the example of Fig. 6 the second apparatus 601 is configured to control access to the resource and/or service. In the example of Fig. 6, the second apparatus 601 generates the challenge and determines whether the response to the challenge satisfies the authentication criteria.

Fig. 7 shows a method of operating an authentication system 600 according to an example. The method begins in step 701. In step 701 the first apparatus 102 transmits an authentication request to the second apparatus 601. The authentication request comprises information identifying the user (e.g. a username) on whose behalf the first apparatus 102 is trying to authenticate (i.e. gain access to the resource and/or service).

The second apparatus 601 subsequently receives the authentication request from the first apparatus 102. The second apparatus 601 subsequently generates a challenge. The second apparatus 601 uses the information identifying the user (from the authentication request 701) to obtain the keywords and/or passphrase associated with the user 101. The second apparatus 601 generates a challenge based on the obtained keywords and/or passphrase. For example, by adding one or more camouflage words to one or more of the keywords. After generating the challenge, the second apparatus 601 transmits the challenge to the first apparatus 102.

The first apparatus 102 receives the challenge from the second apparatus 601 and communicates the challenge to the user 101 (e.g., by playing the challenge through earphones associated with the user 101 or displaying the challenge on a display of the first apparatus 102). The user 101 subsequently responds to the challenge.

In step 703 the first apparatus 102 transmits information identifying the response. In an example the first apparatus 102 transmits the response to the challenge generated by the user 101. In an example where the second apparatus 601 is using single factor authentication, the response comprises a text representation of the response from the user 101 (e.g. generated by performing natural language processing on a response to the challenge spoken by the user 101). In an example where the second apparatus 601 is using two factor authentication, the response comprises information identifying the spoken response (e.g. a recording of the user 101 speaking the response to the challenge). The response transmitted by the first apparatus 102 is received by the second apparatus 601.

In step 704 the second apparatus 601 processes the response to determine whether the user 101 of the first apparatus 102 is permitted to access the resource and/or service controlled by the second apparatus 601. In an example, the response is processed using single factor authentication techniques as described in relation to the method of Fig. 4C. In another example the response is processing using two factor authentication techniques according to the method of Fig. 4E.

After generating an authentication decision the method proceeds to step 705. In step 705 the second apparatus 601 transmits the authentication decision to the first apparatus 102.

Although the example method of Fig. 7 is discussed in relation to an example where the complete challenge is transmitted to the user in step 702, it will be appreciated that the method of Fig. 7 can also be used for a multi-part challenge. In this case steps 702, 703 and 704 are repeated for each part of the challenge as required.

In the examples above, authentication is based on a single factor or based on two factors. There is also provided a method of performing three-factor authentication.

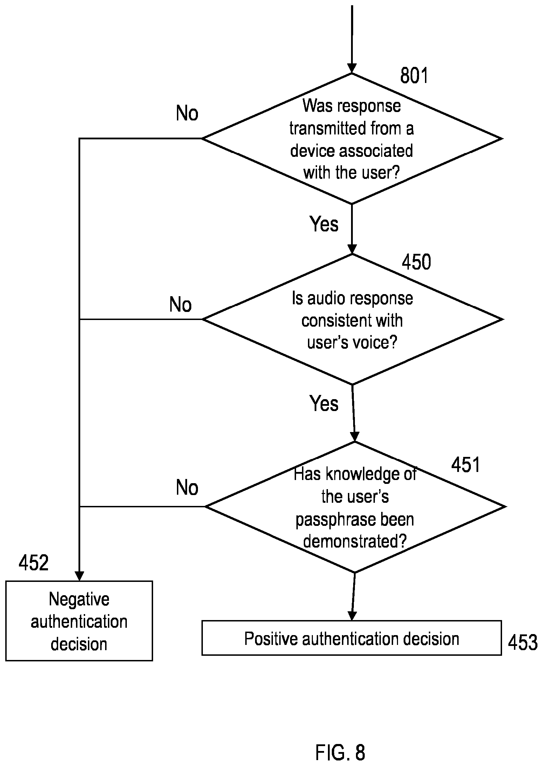

Fig. 8 shows an authentication method using three factor authentication according to an example. The example method of Fig. 8 will be discussed in relation to the system of Fig. 7, where the second apparatus 601 is responsible for controlling access to the resource and/or service. In the three factor authentication method, during registration of the registered user, information identifying an apparatus associated with the user is also obtained. In an example, the information identifying the apparatus associated with the user includes a MAC address and/or a serial number.

In an example, the method of Fig. 8 is performed by the second apparatus 601 (i.e. the server).

The method begins in step 801 where it is determined whether the response was generated by the device associated with the user. In an example, the authentication request (transmitted in step 701 of Fig. 7) comprises information identifying the device that the request was transmitted from.

In step 801 of Fig. 8 the information identifying the device (including in the request from step 701) is compared with the information identifying the apparatus of the user (which was obtained as a credential during the registration phase). If the information identifying the requesting apparatus matches the registered apparatus of the user the method proceeds to step 450, where a second factor determination is made. If, in step 801, it is determined that the request was not generated by the registered apparatus of the user the method proceeds to step 452 where a negative authentication decision is generated preventing the user from accessing the resource and/or service.

Steps 450, 451, 452 and 453 comprise the same steps and techniques as described in relation to Fig. 4E. As a result, a detailed discussion will be omitted for brevity.

Although in example above the first apparatus 102 transmits information identifying the apparatus in the request for authentication (i.e. step 701), in other examples the information identifying the apparatus is transmitted by the first apparatus 102 as part of the response to the challenge (i.e. in step 703 of Fig. 7).

In an example, the method of registering at least one credential of the user (i.e. step 201) is performed by the second apparatus 601.

In another example, there is also a second authentication system. The second authentication system comprises the first apparatus 102 (e.g. a smartphone) associated with the user 101 and the second apparatus 601. The first apparatus 102 comprises functionality (e.g. in the form of an application being executed by the first apparatus 102) to request a challenge from the second apparatus 601 (e.g. the server). The challenge is transmitted by the second apparatus 601 and obtained by the application being executed by the first apparatus 102. The application causes the first apparatus 102 to convey the received challenge to the user 101.

The first apparatus 102 obtains the response from the user and communicates the response to the application running on the first apparatus 102. Based on the obtained response, the application determines an authentication decision (e.g. using the authentication methods discussed above). Based on this authentication decision, the application controls access to the resource and/or service requested by the user 101.

An example implementation of the first apparatus 102 will now be discussed.

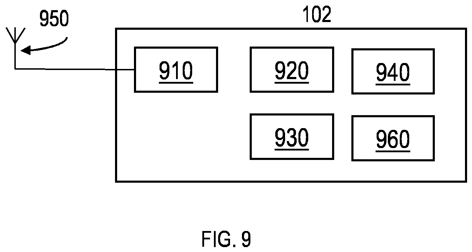

Fig. 9 shows an implementation of the first apparatus 102 according to an example. The first apparatus 102 comprises an input/output module 910, a processor 920, a non-volatile memory 930 and a volatile memory 940 (e.g. a RAM). The input/output module 910 is communicatively connected to an antenna 950. The antenna 950 is configured to receive wireless signals from, and transmit wireless signals to the second apparatus 601. The processor 920 is coupled to the input/output module 910, the non-volatile memory 930 and the volatile memory 940.

The non-volatile memory 930 stores computer program instructions that, when executed by the processor 920, cause the processor 920 to execute program steps that implement the functionality of a first apparatus 102 as described in the above-methods. In an example, the computer program instructions are transferred from the non-volatile memory 930 to the volatile memory 940 prior to being executed. Optionally, the first apparatus 102 also comprises a display 960.

In an example, the non-transitory memory (e.g. the non-volatile memory 930 and/or the volatile memory 940) comprises computer program instructions that, when executed, perform the methods described above.

Whilst in the example described above the antenna 950 is shown to be situated outside of, but connected to, the first apparatus 106 it will be appreciated that in other examples the antenna 950 forms part of the apparatus 106.

In an example the first apparatus 102 also comprises a display (not shown) configured to present information to a user and receive information from the user. In an example, the input/output module 910 comprises an audio input/output means and is configured for communicating audio information with the user (e.g. to relay the challenge to the user and/or receive a response from the user). In an example, the input/output module 910 comprises a loudspeaker and a microphone. In another example, the input/output module 910 comprises a communication means for communicating with a set of headphones (e.g. wired or wireless headphones).

In an example implementation the second apparatus 601 comprises at least some of the same components (e.g. an input/output module 910, a processor 920, a non-volatile memory 930 and a volatile memory 940 (e.g. a RAM)) as the first apparatus 102. In this example, the non-volatile memory 930 stores computer program instructions that, when executed by the processor 920, cause the processor 920 to execute program steps that implement the functionality of a second apparatus 601 as described in the above-methods.

In the examples above various parameters are predetermined (e.g. by a system administrator) depending on the required security level. It will be appreciated for example, that increasing the number of keywords increases the security of the system. Similarly, the length of the keyphrase, the number of keyphrases, the threshold on speaker verification, and the number of syllables of keywords may all be predetermined (and optionally specified by a system administrator) to obtain a desired security level for the authentication method.

In the examples above the response to the challenge (e.g. step 404) is obtained using audio input means (e.g. a microphone). In other examples the response to the challenge is obtained by obtaining text input from the user. In an example, the response is obtained through a user interface of the first apparatus 102. In another example the challenge is communicated to the user (e.g. step 403) via a user interface of the first apparatus 102 in text form (e.g. the challenge being presented on a display of the first apparatus 102).

The term "non-transitory" as used herein, is a limitation of the medium itself (i.e., tangible, not a signal) as opposed to a limitation on data storage persistency (e.g., RAM vs. ROM).

As used herein, "at least one of the following: <a list of two or more elements>" and "at least one of: <a list of two or more elements>" and similar wording, where the list of two or more elements are joined by "and" or "or", mean at least any one of the elements, or at least any two or more of the elements, or at least all the elements.

While certain arrangements have been described, the arrangements have been presented by way of example only and are not intended to limit the scope of protection. The concepts described herein may be implemented in a variety of other forms. In addition, various omissions, substitutions and changes to the specific implementations described herein may be made without departing from the scope of protection defined in the following claims.

## Claims

1. Apparatus comprising means for:
receiving a request to authenticate a user;
obtaining a challenge, wherein the challenge comprises at least one keyword and at least one camouflage word;
communicating at least a first part of the challenge to the user;
receiving a response from the user; and
authenticating the user in response to determining that the response comprises the at least one camouflage word and does not include at least one keyword.

2. The apparatus according to claim 1, wherein a camouflage word is a word that is not a keyword.

3. The apparatus according to any preceding claim, wherein the at least one keyword comprises a plurality of keywords, and wherein the means are further configured for:
authenticating the user in response to determining that the response comprises the at least one camouflage words and does not include any of the plurality of keywords.

4. The apparatus according to any of claims 1 - 2, wherein the apparatus further comprises means for:
obtaining a passphrase associated with the user, wherein the passphrase comprises at least two keywords in a given order;
generating the challenge, wherein the challenge comprises the at least two keywords; and
authenticating the user in response to determining that the response comprises the at least one camouflage words and omits a keyword of the at least two keywords in the given order of the passphrase.

5. The apparatus according to any preceding claim, wherein the response comprises information identifying a vocal response to the challenge from the user and wherein the apparatus further comprises means for:
performing speaker recognition on the information identifying the vocal response to determine an identity of the user; and
authenticating the user in response to determining that:
the response comprises the at least one camouflage word and omits at least one keyword; and
the identity of the user corresponds to a registered user.

6. The apparatus according to claim 5, wherein:
the challenge comprises a plurality of successive camouflage words at a start of the challenge; and wherein:
performing speaker recognition on the information identifying the vocal response comprises performing speaker recognition on a part of the vocal response corresponding to the plurality of successive camouflage words.

7. The apparatus according to claim 6, wherein speaker recognition is performed using only the part of the vocal response corresponding to the plurality successive camouflage words.

8. The apparatus according to claims 1 or 2, wherein:
the challenge comprises the first part and a second part;
communicating at least the first part of the challenge to the user comprises communicating the first part of the challenge to the user;
receiving a response from the user comprises receiving a first response to the first part of the challenge;
and the apparatus further comprises means for:
communicating the second part of the challenge in response to determining that the first response satisfies a first authentication requirement.

9. The apparatus according to claim 8, wherein the apparatus further comprises means for generating a negative authentication decision in response to determining that the first response does not satisfy the first authentication requirement.

10. The apparatus according to claims 8 or 9, wherein the first response satisfies the first authentication requirement when the first response comprises only camouflage words.

11. The apparatus according to claim 8 wherein:
the first part of the challenge comprises only camouflage words;
the first response comprises information identifying the vocal response to the first part of the challenge; and
wherein the apparatus further comprises means for:
performing speaker recognition on the information identifying the vocal response to determine an identity of the user; and
determining that the first response satisfies the first authentication requirement when the identity of the user corresponds to a registered user.

12. The apparatus according to any of claims 9 - 11, wherein the apparatus further comprises means for:
receiving a second response from the user after communicating the second part of the response; and
authenticating the user in response to determining that:
the first response satisfies the first authentication requirement; and
the second response satisfies the second authentication requirement.

13. The apparatus according to any preceding claim, wherein:
the request to authenticate the user comprises information identifying a second apparatus that generated the request and wherein the apparatus further comprises means for:
authenticating the user in response to determining that the second apparatus that generated the request is associated with the user.

14. The apparatus according to claim any preceding claim, wherein authenticating the user in response to determining that response comprises the at least one camouflage words further comprises:
authenticating the user in response to determining that the response comprises at least one camouflage words in an order that the at least one camouflage words appear in the challenge.

15. A method comprising:
receiving a request to authenticate a user;
obtaining a challenge, wherein the challenge comprises at least one keyword and at least one camouflage word;
communicating at least a first part of the challenge to the user;
receiving a response from the user; and
authenticating the user in response to determining that the response comprises the at least one camouflage word and does not include at least one keyword.
